# FASCICULE DE BREVET EUROPEEN

(11) **EP 1 583 681 B1**
(45) Date de publication et mention de la délivrance du brevet: **09.06.2010**
(21) Numéro de dépôt: 03815837.4
(22) Date de dépôt: 09.12.2003
(51) Int. Cl.: B62D 6/00, B62D 5/04

(54) **DISPOSITIF DE PROTECTION DES BUTÈES DE FIN DE COURSE D'UNE DIRECTION ASSISTÈE ELECTRIQUE**
SCHUTZVORRICHTUNG FÜR DIE ENDANSCHLÄGE EINER ELEKTRISCHEN SERVOLENKANLAGE
PROTECTIVE DEVICE FOR THE LIMIT STOPS OF AN ELECTRICAL POWER STEERING SYSTEM

(30) Priorité: 16.01.2003 FR 0300453
(43) Date de publication de la demande: 12.10.2005
(73) Titulaire: JTEKT Europe, 69540 Irigny (FR)
(72) Inventeur: DEVILLE, Jean-Luc, F-69720 Saint Bonnet de Mure (FR); VILLEZ, Steeve, F-69230 Saint Genis Laval (FR)
(74) Mandataire: Bratel, Gérard
(86) Numéro de dépôt international: PCT/FR2003/003642
(87) Numéro de publication internationale: WO 2004/071847

(56) Documents cités:
- EP-A- 1 251 059
- PATENT ABSTRACTS OF JAPAN vol. 2000, no. 26, 1 juillet 2002 (2002-07-01) -& JP 2001 260926 A (TOYOTA AUTOM LOOM WORKS LTD), 26 septembre 2001 (2001-09-26)

## Description

La présente invention concerne, de façon générale, les véhicules automobiles équipés d'une direction assistée électrique. Cette invention se rapporte, plus particulièrement, à un dispositif de protection des butées de fin de course d'une direction assistée électrique.

La partie mécanique d'une direction de véhicule automobile, à savoir l'ensemble constitué par le volant de conduite, la colonne de direction, le pignon et la crémaillère, dispose de façon habituelle de butées de fin de course. Ces dernières servent à marquer la fin de la rotation du volant, dans un sens ou dans l'autre, et à amortir le déplacement de la crémaillère lorsque celle-ci arrive à une extrémité de sa course dans le carter de direction. Grâce à ces butées de fin de course, le conducteur du véhicule ne ressent pas de chocs violents en cas de braquage complet à droite ou à gauche, et la partie mécanique de la direction est préservée.

Cependant, les butées mécaniques s'usent progressivement avec le temps le nombre d'actions d'amortissement et surtout la violence éventuelle des chocs contre ces butées. Le comportement du conducteur est donc un facteur important de la durée de vie des butées de fin de course de la direction.

Les conséquences de cette situation, après usure des butées, sont alors une augmentation importante du bruit et une dégradation du confort de la direction avec un risque de détériorations futures des pièces mécaniques de la direction.

Par ailleurs, dans le cas d'un véhicule équipé d'une direction assistée électrique, la régulation de cette direction permet, en fonction d'un certain nombre de paramètres, de définir à tout moment un couple ou un effort d'assistance, pouvant amplifier ou au contraire compenser l'effort appliqué par le conducteur au volant, selon des "lois" prédéfinies.

Le document JP-A-2001 260926 décrit déjà un dispositif de protection des butées de fin de course, dans une direction assistée de véhicule pouvant être une direction électrique, ce dispositif exploitant l'angle de braquage, c'est-à-dire l'orientation de la roue directrice, la position absolue du volant de conduite, et le couple appliqué par le conducteur du véhicule sur le volant.

Un premier but de la présente invention est d'assurer la protection des butées de fin de course, donc de prolonger fortement la durée de vie de ces butées, ceci quel que soit le comportement du conducteur, en mettant à profit les possibilités offertes par le système d'assistance électrique d'une direction. Au-delà de cet objectif, l'invention peut même viser la suppression physique des butées de fin de course de la direction, en créant les butées virtuelles par la seule régulation de la direction assistée électrique, en vue d'une réduction du coût de la direction complète.

A cet effet, l'invention a essentiellement pour objet un dispositif de protection des butées de fin de course d'une direction assistée électrique de véhicule automobile, le dispositif traitant un signal représentatif de la position absolue du volant de conduite du véhicule, un signal représentatif de la vitesse de rotation du volant, et un signal représentatif du couple correspondant à l'effort exercé sur le volant par le conducteur du véhicule, pour limiter le choc à l'approche de la butée en limitant l'effort exercé sur la direction en limitant l'effort total somme de celui exercé sur le volant et de l'effort d'assistance, le dispositif étant caractérisé en ce qu'il détermine un couple d'effort total maximum autorisé sur la direction fonction des signaux représentatifs de l'angle du volant et de la vitesse de rotation du volant, pour piloter le moteur électrique d'assistance de telle manière que la limite diminue à l'approche des positions de fin de course et ce d'autant plus que la vitesse de rotation du volant est élevée.

L'idée inventive consiste ainsi à ajouter un bloc fonctionnel dans les moyens de détermination du couple d'assistance, de manière à prendre en charge spécifiquement la protection des butées de fin de course de la direction, le bloc fonctionnel utilisant de façon combinée les informations suivantes :
- position absolue du volant, déterminée par un capteur d'angle ou par une estimation résultant d'un calcul ;
- vitesse de rotation du volant, déterminée par calcul, c'est-à-dire par dérivation, par rapport au temps, de la position du volant ;
- couple d'effort du conducteur au volant, déterminé par un capteur de couple.

A partir de ces informations, le bloc additionnel détermine une loi de limitation de l'assistance électrique, en fonction de la position et de la vitesse actuelle du volant, et aussi de l'effort sur le volant, de manière à "anticiper" l'arrivée en butée du volant, afin d'empêcher tout choc violent en fin de course. La limitation de l'assistance électrique a pour résultat que l'effort à fournir par le conducteur, en fin de rotation du volant, sera d'autant plus important que le conducteur essayera de donner un "coup de volant" rapide et dans une position proche de la butée.

Ainsi, la durée de vie des butées de la direction peut être fortement prolongée et garantie, quel que soit le comportement du conducteur.

Dans le concept de base de l'invention, l'effort d'assistance, bien que réduit à l'approche de la butée, reste orienté dans le même sens que l'effort exercé par le conducteur sur le volant, de sorte que la butée physique sera atteinte, toutefois avec un faible choc qui évitera, ou du moins ralentira fortement, l'usure et/ou la dégradation des butées.

Cependant, selon un mode de réalisation perfectionné du dispositif objet de l'invention, ce dispositif est prévu pour que l'effort d'assistance, développé à l'approche de la fin de course de la direction, soit un effort résistant, s'opposant à l'effort du conducteur sur le volant, de manière à empêcher l'arrivée en butée de la direction. Autrement dit, l'assistance agit alors en opposition à l'effort exercé par le conducteur, et ainsi la régulation de l'effort d'assistance intervient sous la forme d'une compensation plus ou moins complète de l'effort appliqué par le conducteur au volant. De cette manière, il est obtenu une butée "virtuelle", résultant de la seule régulation de la direction assistée électrique, ce qui apporte une efficacité et une économie supplémentaires.

L'invention sera mieux comprise à l'aide de la description qui suit, en référence au dessin schématique annexé représentant, à titre d'exemple, une forme d'exécution de ce dispositif de protection des butées de fin de course d'une direction assistée électrique, et illustrant le fonctionnement de ce dispositif :
Figure 1 est une vue en perspective, très schématique, d'une direction assistée électrique recevant le dispositif de protection objet de l'invention ;
Figure 2 est un organigramme qui illustre le fonctionnement de ce dispositif ;
Figure 3 représente une famille de courbes caractéristiques du fonctionnement de ce dispositif.

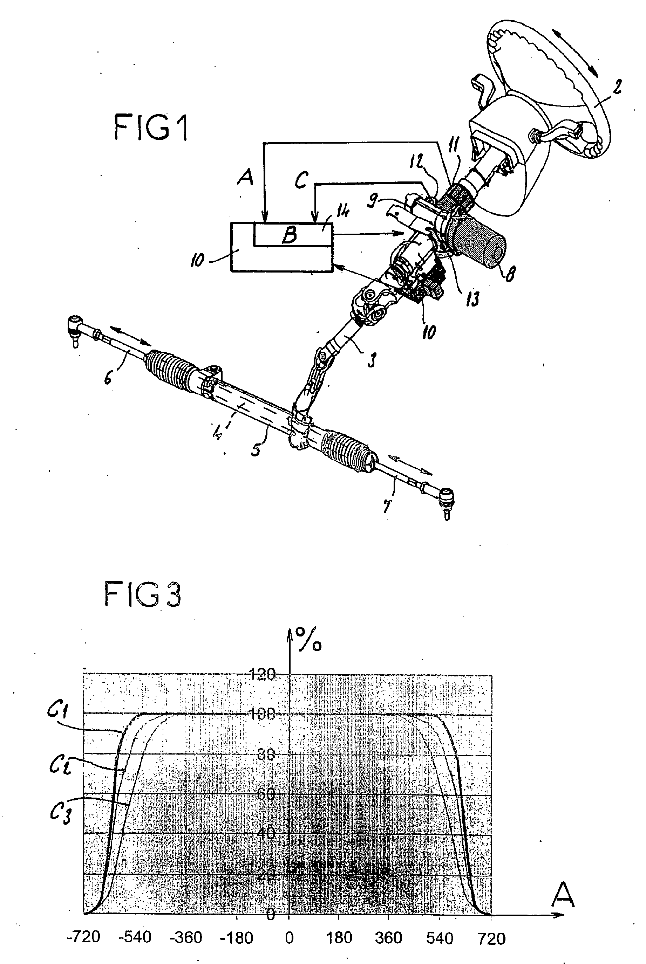

Sur les figures 1 à 3, les mêmes éléments portent les mêmes références.

La figure 1 montre les éléments mécaniques connus d'une direction de véhicule automobile, en particulier un volant de conduite 2 lié à une colonne de direction 3, dont l'extrémité éloignée du volant 2 porte un pignon de direction en prise avec une crémaillère 4, montée coulissante dans un carter de direction 5. Les deux extrémités opposées de la crémaillère 4 sont respectivement liées, par l'intermédiaire de biellettes 6 et 7, aux roues directrices droite et gauche du véhicule.

S'agissant d'une direction assistée électrique, celle-ci comprend encore un moteur électrique d'assistance 8, à deux sens de rotation, dont l'arbre de sortie est accouplé, par l'intermédiaire d'un réducteur de vitesse 9 par exemple à vis sans fin et roue tangente, à la colonne de direction 3, de manière à transmettre un couple moteur (éventuellement aussi un couple résistant) à cette colonne de direction 3.

Le moteur électrique d'assistance 8 est piloté par un calculateur électronique 10 qui reçoit, entre autres, un signal électrique A issu d'un capteur 11 de l'angle du volant 2, ou de toute autre grandeur équivalente, c'est-à-dire représentative de l'angle instantané de braquage du véhicule automobile concerné. Le calculateur électronique 10 reçoit aussi un signal C issu d'un capteur 12 du couple exercé sur le volant 2 par le conducteur du véhicule. Dans l'exemple illustré, il est encore prévu un capteur 13 de la position du moteur électrique d'assistance 8.

Dans le calculateur électronique 10, il est distingué un bloc fonctionnel 14 qui reçoit et traite les signaux A et C issus respectivement du capteur d'angle 11 et du capteur de couple 12, et qui traite aussi un signal B représentatif de la vitesse de rotation du volant 2, le signal B pouvant être obtenu par le calcul, en tant que dérivée par rapport au temps de l'angle du volant 2, donc du signal A.

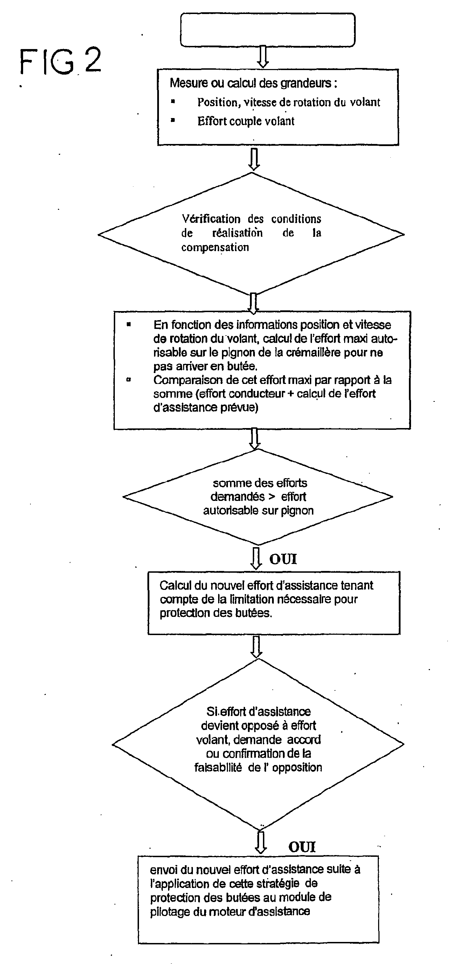

A partir de ces signaux A, B et C, le bloc fonctionnel 14 intervient, notamment à l'approche des butées de braquage à droite ou à gauche, pour piloter le moteur électrique d'assistance 8 de manière à exercer, par ce moteur 8, un effort d'assistance tel que l'effort total, somme de l'effort exercé par le conducteur et de l'effort d'assistance, ne dépasse pas une valeur limite prédéterminée. L'algorithme mis en oeuvre (voir figure 2) limite fortement cet effort total, en fonction des signaux A, B et C, lorsque l'angle du volant se rapproche de la butée.

Cette limitation de l'effort peut être représentée, comme l'illustre la figure 3, par une famille de courbes, l'angle A en degrés du volant étant porté en abscisses, et l'effort maximum autorisé au niveau du pignon de direction étant porté en ordonnées, en pourcentage, comme fonction de l'angle A du volant. A titre d'exemple, sont ici indiquées trois courbes C1, C2 et C3, qui sont respectivement :
- une courbe supérieure C1, pour une vitesse du volant inférieure à X degrés par seconde ;
- une courbe intermédiaire C2, pour une vitesse du volant comprise entre les deux valeurs X et Y (en degrés/seconde) ;
- une courbe inférieure C3, pour une vitesse du volant supérieure à Y degrés par seconde.

Ainsi, plus la vitesse du volant 2 est élevée, plus l'action du dispositif est "anticipée", de manière à empêcher tout choc violent en fin de course.

L'on ne s'éloignerait pas du cadre de l'invention, telle que définie dans les revendications annexées, quels que soient :
- les moyens de mesure, ou de détermination par le calcul, de l'angle du volant ou autre grandeur significative équivalente ;
- le détail de l'organigramme de fonctionnement du dispositif ;
- les particularités de la direction assistée électrique, par exemple le point d'action du moteur électrique d'assistance qui peut être situé sur la colonne de direction, ou sur le pignon de direction, ou encore directement sur la crémaillère.

## Revendications

1. Dispositif de protection des butées de fin de course d'une direction assistée de véhicule automobile, le dispositif traitant un signal (A) représentatif de la position absolue du volant de conduite (2) du véhicule, un signal (B) représentatif de la vitesse de rotation du volant (2), et un signal (C) représentatif du couple correspondant à l'effort exercé sur le volant (2) par le conducteur du véhicule, pour limiter le choc à l'approche de la butée en limitant l'effort exercé sur la direction en limitant l'effort total somme de celui exercé sur le volant (C) et de l'effort d'assistance, **caractérisé en ce qu'**il détermine un couple d'effort total maximum (C1, C2, C3) autorisé sur la direction fonction des signaux représentatifs de l'angle du volant (A) et de la vitesse de rotation du volant (B), pour piloter le moteur électrique d'assistance (8) de telle manière que la limite diminue à l'approche des positions de fin de course et ce d'autant plus et d'autant plus tôt que la vitesse de rotation du volant (B) est élevée.

2. Dispositif selon la revendication 1, **caractérisé en ce que** la position absolue du volant (2) est déterminée par le calcul, en particulier par dérivation, par rapport au temps, de la position du volant (2).

3. Dispositif selon la revendication 1 ou 2, **caractérisé en ce qu'**il est prévu pour que l'effort d'assistance, développé à l'approche de la fin de course de la direction, soit un effort résistant, s'opposant à l'effort du conducteur sur le volant (2), de manière à empêcher l'arrivée en butée de la direction.

## Claims

1. Device for protecting end-of-travel stops of assisted steering of a motor vehicle, the device processing a signal (A) representative of the absolute position of the steering wheel (2) of the vehicle, a signal (B) representative of the speed of rotation of the steering wheel (2), and a signal (C) representative of the torque corresponding to the force applied to the steering wheel (2) by the driver of the vehicle, in order to limit the impact on approaching the stop by limiting the force applied on the steering while limiting the total force that is the sum of that applied to the steering wheel (2) and the force of assistance, **characterized in that** it determines a maximum total force torque (C1, C2, C3) that is allowed on the steering according to the signals representative of the angle of the steering wheel (A) and of the speed of rotation of the steering wheel (B), in order to control the electric assistance motor (8) so that the limit reduces on approaching the end-of-travel positions and this occurs all the more and all the sooner if the speed of rotation of the steering wheel (B) is high.

2. Device according to Claim 1, **characterized in that** the absolute position of the steering wheel (2) is determined by the computation, in particular by derivation, relative to the time, of the position of the steering wheel (2).

3. Device according to Claim 1 or 2, **characterized in that** provision is made for the force of assistance, developed on the approach to the end-of-travel of the steering, to be a resistant force, opposing the force of the driver on the steering wheel (2), in order to prevent the steering reaching the stop.

## Patentansprüche

1. Vorrichtung zum Schutz der Endanschläge einer Kraftfahrzeug-Servolenkung, wobei die Vorrichtung ein Signal (A), das für die Absolutstellung des Lenkrads (2) des Fahrzeugs repräsentativ ist, ein Signal (B), das für die Drehgeschwindigkeit des Lenkrads (2) repräsentativ ist, und ein für das Drehmoment repräsentatives Signal (C) verarbeitet, das der Kraft entspricht, die vom Fahrer des Fahrzeugs auf das Lenkrad (2) ausgeübt wird, um den Aufprall bei der Annäherung an den Anschlag durch Begrenzung der auf die Lenkung ausgeübten Kraft zu begrenzen, indem die Gesamtkraft begrenzt wird, die die Summe der auf das Lenkrad (2) ausgeübten Kraft und der Unterstützungskraft ist, **dadurch gekennzeichnet, dass** sie ein maximales an der Lenkung erlaubtes Gesamtkraftmoment (C1, C2, C3) in Abhängigkeit von den für den Winkel (A) des Lenkrads und die Drehgeschwindigkeit (B) des Lenkrads repräsentativen Signalen bestimmt, um den elektrischen Unterstützungsmotor (8) so zu steuern, dass die Grenze bei Annäherung an die Endstellungen abnimmt, und dies umso mehr und umso eher, als die Drehgeschwindigkeit (B) des Lenkrads hoch ist.

2. Vorrichtung nach Anspruch 1, **dadurch gekennzeichnet, dass** die Absolutstellung des Lenkrads (2) durch die Berechnung, insbesondere durch Ableitung, bezüglich der Zeit, der Stellung des Lenkrads (2) bestimmt wird.

3. Vorrichtung nach Anspruch 1 oder 2, **dadurch gekennzeichnet, dass** sie vorgesehen ist, damit die Unterstützungskraft, die bei Annäherung an die Endstellung der Lenkung entwickelt wird, ein Widerstand ist, der der Krafteinwirkung des Fahrers auf das Lenkrad (2) entgegenwirkt, um die Ankunft der Lenkung am Anschlag zu verhindern.
